# EUROPEAN PATENT SPECIFICATION

(11) **EP 3 541 645 B1**
(45) Date of publication and mention of the grant of the patent: **18.08.2021**
(21) Application number: 17801450.2
(22) Date of filing: 20.11.2017
(51) Int. Cl.: B60H 1/00, F25B 39/04, F28D 1/053, F28F 9/02

(54) **CONDENSER FOR AN AIR CONDITIONER, IN PARTICULAR FOR A MOTOR VEHICLE**
KONDENSATOR FÜR EINE KLIMAANLAGE, INSBESONDERE FÜR EIN KRAFTFAHRZEUG
CONDENSEUR DE CLIMATISATION, NOTAMMENT D'UN VÉHICULE AUTOMOBILE

(30) Priority: 21.11.2016 DE 102016122310
(43) Date of publication of application: 25.09.2019
(73) Proprietor: Valeo Klimasysteme GmbH, 96476 Bad Rodach (DE)
(72) Inventor: GENGER, Michael, 96476 Bad Rodach (DE); SEKTI, Condro, 74321 Bietigheim-Bissingen (DE)
(74) Representative: Bialkowski, Adam
(86) International application number: PCT/EP2017/079805
(87) International publication number: WO 2018/091710

(56) References cited:
- DE-A1- 10 155 001
- DE-A1- 10 339 072
- US-A- 5 477 919
- US-A1- 2009 120 627
- US-A1- 2013 126 126
- US-B1- 6 626 007

## Description

The invention relates to a condenser having a first and a second collecting tube, a plurality of heater canals, which extend between the two collecting tubes, an inlet for a substantially gaseous coolant, which is arranged at one of the two collecting tubes, and an outlet for a substantially liquid coolant, which is arranged at one of the two collecting tubes.

Such a condenser is part of a coolant circuit, such as that used for a vehicle air conditioner. For motor vehicles, such air conditioners are also known as HVAC. The essential components of such an air conditioner are a compressor, the condenser and an evaporator.

The function of the condenser consists in extracting heat from the gaseous coolant so that it condenses. To this end, the coolant is conducted through the heater canals around which ambient air flows externally.

Owing to the mode of operation of the condenser and the normal flow paths, the inlet and the outlet for the coolant are normally arranged at a spacing from one another. In a simple example, the coolant inlet is located at one of the collecting tubes, and the coolant outlet is located at the other collecting tube. If the inlet and the outlet are located at the same collecting tube, the inlet is normally arranged at one end whilst the outlet is located at the other end (for example at the top and bottom).

However, in view of the comparatively narrow installation space for such condensers, it can be necessary to arrange the inlet and the outlet at other points than is expedient in terms of the fluidics and/or thermodynamics. To this end, an outer "jumper line" has hitherto been used which forms a connection point at one end for the corresponding coolant line and whereof the other end is guided to the actual inlet or outlet. However, this solution is disadvantageous in that the overall installation space required for the condenser is increased.

The object of the invention consists in improving the known condenser such that the flexibility when connecting the condenser to a coolant line is increased without thereby increasing the installation space.

As known from US2013126126 A1, which shows the preamble of claim 1, in a condenser of the type mentioned at the outset one of the collecting tubes is provided with an insert which defines a flow canal which is in communication at one end with the coolant inlet and at the other end, by means of an overflow opening, with the inside of the collecting tube. The main task of the insert is based on the basic idea of integrating the "jumper line", with which the connection point for the coolant line is arranged at the desired point on the collecting tube, inside the corresponding collecting tube. There is consequently no change to the required installation space.

To further ameliorate such a condenser and according to the invention, the insert is in the form of a trough with inclined end faces. In terms of the fluidics, this is advantageous since such an insert has only a negligible influence on the coolant flow in the remaining cross section of the collecting tube.

The insert is preferably provided with an oil separation opening through which at least a substantial part of the oil which is transported with the gaseous coolant in the condenser is separated immediately and can therefore be guided to another point in the condenser so that it exits the condenser again as quickly as possible. The overall result of this is that there is less oil in the condenser and thus more oil is available for lubricating the compressor.

The oil separation opening preferably has an area in the order of magnitude of 0.75 mm² to 9 mm², in particular in the order of magnitude of 5 mm² to 7.5 mm². With such an area, due to the pressure ratios which normally prevail, the oil is discharged in the desired manner without gaseous coolant flowing through the oil separation opening in an undesired manner.

The oil separation opening is preferably arranged in one of the end faces of the insert, and, more precisely, preferably in the immediate vicinity of the inlet for the coolant, so that oil there can be immediately removed from the further flow path of the gaseous coolant.

The overflow opening preferably has an area in the order of magnitude of 50 mm² to 100 mm², in particular in the order of magnitude of 75 mm² to 80 mm². This area in relation to the area of the oil separation opening ensures the desired separation between oil and gaseous coolant.

The overflow opening preferably has an oval form so that it is still possible to achieve the desired area with a compact insert.

The overflow opening is preferably arranged in one of the end faces of the insert, specifically in the end face remote from the oil separation opening.

According to a preferred embodiment, the insert is a bent part made from chased sheet, which can be manufactured at little expense.

To seal the flow canal to the outside, the insert is fixedly connected to a cover. For example, it can be clinched thereto.

The cover is then tightly connected to the collecting tube so that the interior of the collecting tube is sealed with respect to the environment. In particular, the cover can be soldered to the collecting tube.

The invention is described below with reference to an embodiment which is illustrated in the accompanying drawings. These show:
- Figure 1 a side view of a condenser according to a first embodiment of the invention;
- Figure 2 a plan view of the condenser of Figure 1;
- Figure 3 a section along the plane III-III of Figure 2;
- Figure 4 a section along the plane IV of Figure 3;
- Figure 5 a section along the plane V of Figure 3;
- Figure 6 a section along the plane VI of Figure 3;
- Figure 7 the condenser of Figure 1 in a sectional view;
- Figure 8 a condenser according to a second embodiment in a view corresponding to that of Figure 7;
- Figure 9 a condenser according to a third embodiment in a view corresponding to that of Figure 7;
- Figure 10 a perspective view of a blank from which an insert for a condenser according to the invention can be manufactured;
- Figure 11 a perspective view of the blank of Figure 10 according to a first processing step;
- Figure 12 a perspective view of the fully formed insert;
- Figure 13 the insert of Figure 12 mounted on a cover;
- Figure 14 the cover of Figure 13 mounted on a collecting tube;
- Figure 15 a schematic sectional view of the collecting tube of Figure 14 with the formed heater canals;
- Figure 16 a plan view of the assembly known from Figure 13;
- Figure 17 a side view of the assembly of Figure 16; and
- Figure 18 a detail of the insert.

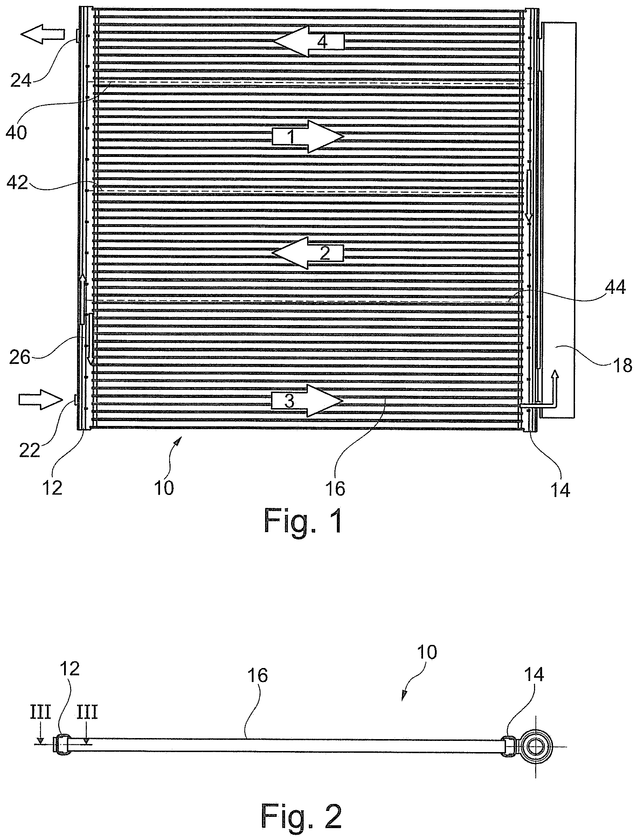

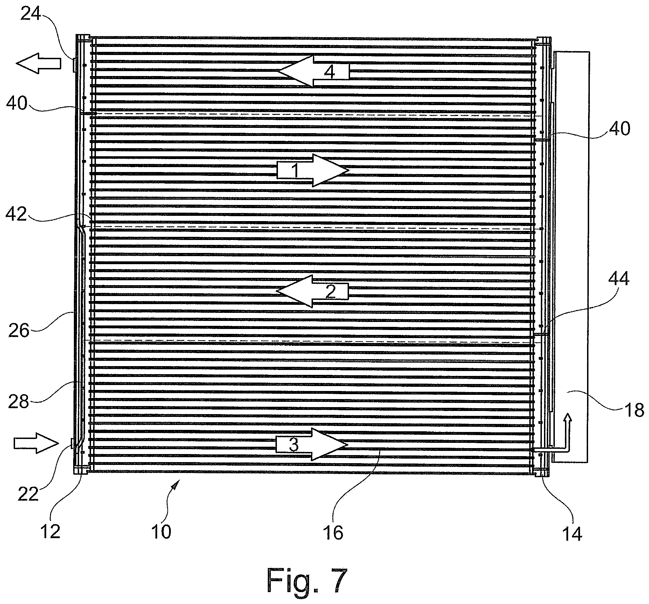

Figures 1 to 7 show a condenser 10 according to a first embodiment. It is part of a coolant circuit of a motor vehicle air conditioner.

The condenser 10 has a first collecting tube 12, a second collecting tube 14 and a multiplicity of heater canals 16 which extend between the first and the second collecting tube 12, 14.

A receiver-drier 18 is mounted at the second collecting tube 14.

The first collecting tube 12 here is provided with an inlet 22 through which the condenser 10 is supplied with coolant in the gaseous state.

An outlet 24 is likewise mounted here at the first collecting tube 12, through which the coolant is discharged in the liquid state (at least for the most part) .

In Figure 1, the flow paths of the coolant through the condenser 10 are indicated by the arrows 1 to 4. It can be seen that the coolant does not enter into the heater canals 16 at the height of the coolant inlet 22, but laterally offset in the upper region of the condenser. The reason for this is that a flow canal 26 is formed inside the first collecting tube 12, which flow canal defines the "height" at which the coolant is delivered into the collecting tube 12.

The flow canal 26 is formed in that an insert 28 is arranged inside the collecting tube 12, which insert defines the flow canal 26 together with a cover 30.

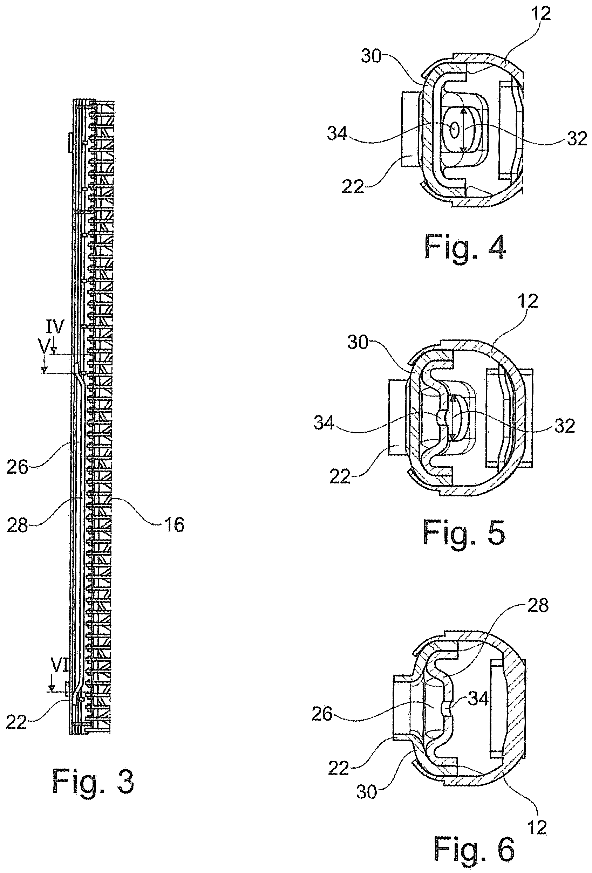

The insert 28 has a generally trough-shaped elongated form, wherein one end (the lower end in Figure 3) is arranged a short distance below the coolant inlet 22. The upper end is located at approximately half the height of the condenser.

The insert 28 is provided with an overflow opening 32 at the upper end, through which the flow canal 26 is open to the inside of the collecting tube 12.

The area of the overflow opening 32 is preferably in the order of magnitude of 75 mm² to 80 mm².

At its lower end, the flow canal 26 is virtually closed with respect to the interior of the collecting tube 12. Only a small oil separation opening 34 is present. This has an area in the order of magnitude of preferably 5 mm² to 7.5 mm².

The coolant to be condensed is supplied to the condenser 10 via the coolant inlet 22 in the (substantially) gaseous state. Oil entrained by the gas collects at the lower end of the flow canal 26 and is discharged downwards through the oil separation opening 34 owing to the prevailing pressure ratios. The gaseous coolant then flows further upwards along the flow canal 26, where it enters into the first collecting tube 12 through the overflow opening 32, and more precisely in a region between two deflectors 40, 42.

The gaseous coolant flows between the deflectors 40, 42 in the direction of the arrow 1 through the heater canals, whereby it is cooled to some extent. In the second collecting tube 14, it flows downwards into a region which is delimited between the deflector 42 and a further deflector 44. It flows here in the opposite direction back through the heater canals 16 in the direction of the arrow 2.

In the first collecting tube 12, the coolant flows further downwards in a region delimited between the deflector 42 and the bottom of the collecting tube 12 to then flow back to the second collecting tube 14 in the direction of the arrow 3.

It enters into the receiver-drier 18 here and flows upwards to flow in a region delimited above the deflector 40 in the direction of the arrow 4 to the first collecting tube 12 and therefore to the coolant outlet 24.

The temperature of the coolant decreases from the section 1 via the section 2 to the section 3, wherein the proportion of the liquid phase increases accordingly. The coolant is (at least virtually) completely in its liquid state in the region 3. The coolant is supercooled in the region 4.

The oil contained in the gaseous coolant, which is delivered downwards through the oil separation opening 34 directly into the third section, is entrained accordingly by the liquid coolant and introduced back into the coolant circuit via the coolant outlet 24.

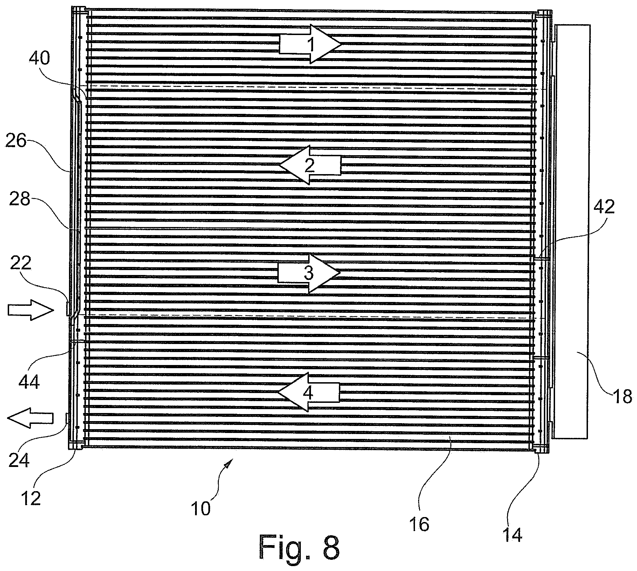

Figure 8 shows a second embodiment in which, likewise owing to the flow canal 26 formed with the insert 28, the actual entry of the gaseous coolant into the first collecting tube 12 is "shifted". By means of the deflectors 40, 42, 44, the flow path here is defined so that the gaseous coolant is firstly guided through the upper section of the condenser 10 to the second collecting tube 14, then in the middle to the first collecting tube and back to the second collecting tube again and then finally in the super cooler along the arrow 4 to the coolant outlet 24.

In this embodiment too, the oil separation opening in the insert 28 ensures that the oil arrives directly in "section 3" of the flow path of the coolant, i.e. at the point where the coolant is present in the liquid state (at least for the most part).

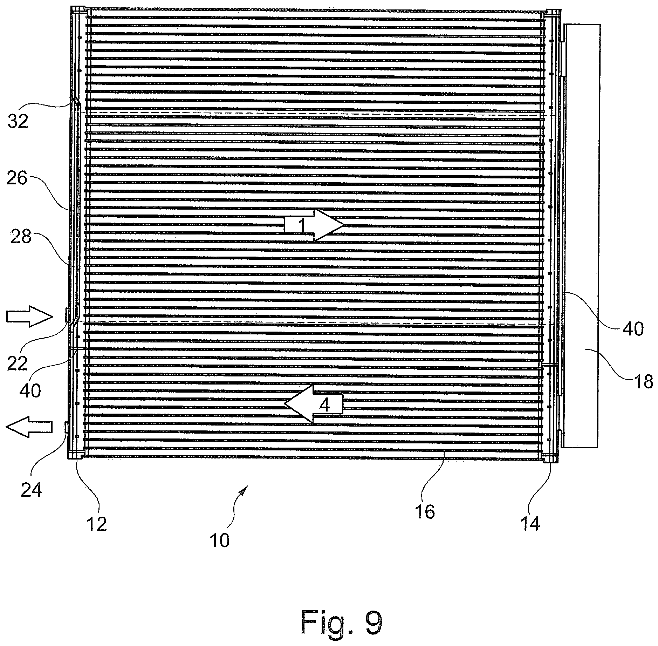

Figure 9 shows a third embodiment in which the coolant inlet 22 and the coolant outlet 24 are arranged in the same manner as in the second embodiment.

However, only a single deflector 40 is used, so that coolant flows from the first collecting tube 12 to the second collecting tube 14, and from there through the super cooler in the direction of the arrow 4 to the coolant outlet 24.

The essential advantage of the flow canal 26 formed by the insert 28 consists in that, without external attachments and without altering the installation space required for the condenser 10, the gaseous coolant can be introduced at the desired "height" into the collecting tube which is provided with the coolant inlet 22. In other words, the coolant inlet 22 can be arranged laterally offset relative to the level at which the coolant enters into the collecting tube 12.

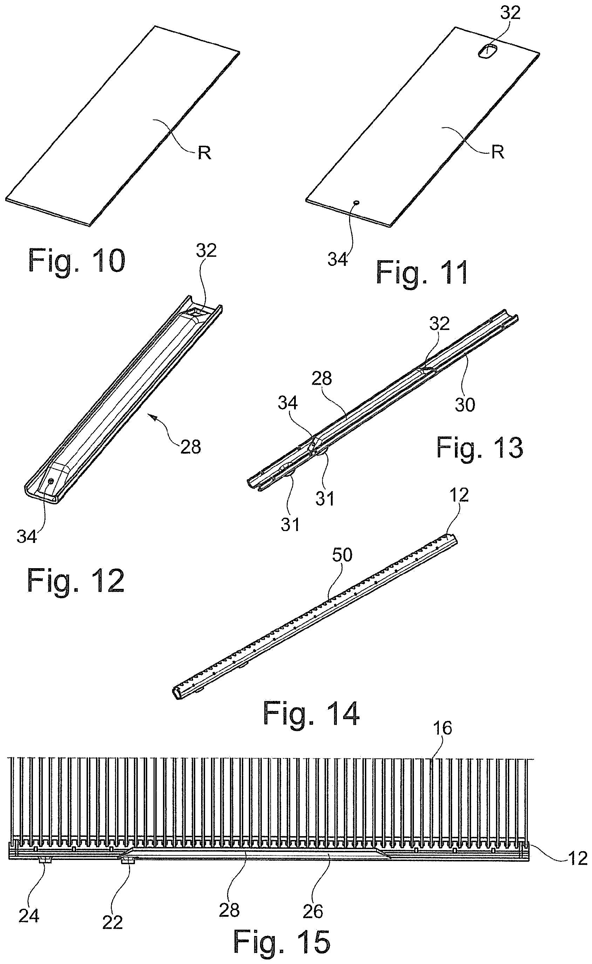

The manufacture of the insert 28 and the corresponding collecting tube is now described with reference to Figures 10 to 15.

The starting point is the blank R shown in Figure 10, which is a rectangular sheet blank. The wall thickness of the sheet can be in the order of magnitude of 0.5 mm. In particular, the material used can essentially be the same as that which is also used for the collecting tube and the other components of the condenser 10.

The openings, which later form the overflow opening 32 and the oil separation opening 34 (see Figure 11), can then be punched at the two mutually remote narrow ends of the blank R.

The blank R is then formed to produce the insert 28 shown in Figure 12. It has a trough-shaped form, wherein the end faces of the trough extend at an incline. The overflow opening 32 and the oil separation opening 34 are then arranged in these inclined end faces. The lateral edges of the insert are furthermore angled.

The insert 28 is then mounted on a cover 30. The cover 30 is designed to be elongated and to have a curved cross section (see in particular Figure 5) and the insert 28 is mounted on the cover 30 such that the two concave sides of the components 28, 30 face one another. The flow canal 26 is thus delimited between the two components 28, 30.

The insert 28 and the cover 30 can be clinched to one another.

As can also be seen in Figure 13, the cover 30 is provided with two ports 31, which later form the coolant inlet 22 and the coolant outlet 24.

As a next step, the cover 30 is mounted on the collecting tube 12 (see Figure 14). The collecting tube is provided with a multiplicity of openings 50 on its side remote from the cover 30, which lead into the heater canals 16. This can also be seen schematically in Figure 15.

The cover and the collecting tube 12 are preferably soldered to one another.

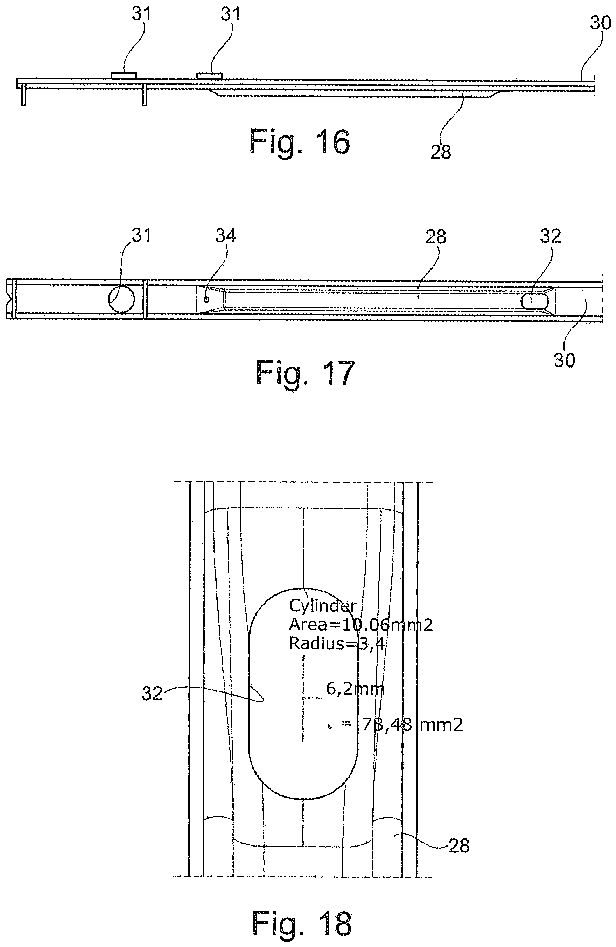

In Figures 16 and 17, the cover 30 with the insert 28 mounted thereon can be seen in detail. Since the end walls of the trough-shaped insert 28 which are provided with the openings 32, 34 are aligned at an incline, they do not prevent the coolant flowing inside the collecting tube 12.

The oval form of the overflow opening 32 is clearly shown in Figure 18.

## Claims

1. Condenser (10) having a first and a second collecting tube (12, 14), a plurality of heater canals (16), which extend between the two collecting tubes, an inlet (22) for a substantially gaseous coolant, which is arranged at one of the two collecting tubes (12, 14), and an outlet (24) for a substantially liquid coolant, which is arranged at one of the two collecting tubes (12, 14), wherein one of the collecting tubes (12, 14) is provided with an insert (28) which defines a flow canal (26) which is in communication at one end with the coolant inlet (22) and at the other end, by means of an overflow opening (32), with the inside of the collecting tube (12), **characterized in that** the insert (28) is in the form of a trough with inclined end faces.

2. Condenser according to Claim 1, **characterized in that** the insert (28) is provided with an oil separation opening (34).

3. Condenser according to Claim 2, **characterized in that** the oil separation opening (34) has an area in the order of magnitude of 0.75 to 9 mm², in particular in the order of magnitude of 5 to 7.5 mm².

4. Condenser according to Claims 2 and 3 and according to Claim 1, **characterized in that** the oil separation opening (34) is arranged in one of the end faces of the insert (28).

5. Condenser according to one of the preceding claims, **characterized in that** the overflow opening (32) has an area in the order of magnitude of 50 to 100 mm², in particular in the order of magnitude of 75 to 80 mm².

6. Condenser according to one of the preceding claims, **characterized in that** the overflow opening (32) has an oval form.

7. Condenser according to one of Claims 5 and 6 and according to Claim 1, **characterized in that** the overflow opening (32) is arranged in one of the end faces of the insert (28).

8. Condenser according to one of the preceding claims, **characterized in that** the insert (28) is a bent part made from chased sheet.

9. Condenser according to one of the preceding claims, **characterized in that** the insert (28) is fixedly connected to a cover (30).

10. Condenser according to Claim 9, **characterized in that** the cover (30) is tightly connected to the collecting tube (12, 14).

## Patentansprüche

1. Kondensator (10), der ein erstes und ein zweites Sammelrohr (12, 14), mehrere Heizkanäle (16), die sich zwischen den zwei Sammelrohren erstrecken, einen Eintritt (22) für ein im Wesentlichen gasförmiges Kühlmittel, der an einem der zwei Sammelrohre (12, 14) angeordnet ist, und einen Austritt (24) für ein im Wesentlichen flüssiges Kühlmittel, der an einem der zwei Sammelrohre (12, 14) angeordnet ist, aufweist, wobei eines der Sammelrohre (12, 14) mit einem Einsatz (28) versehen ist, der einen Strömungskanal (26) definiert, der an einem Ende mit dem Kühlmitteleintritt (22) und am anderen Ende mittels einer Überlauföffnung (32) mit dem Inneren des Sammelrohres (12) in Verbindung steht, **dadurch gekennzeichnet, dass** der Einsatz (28) in der Form einer Rinne mit geneigten Stirnflächen vorliegt.

2. Kondensator nach Anspruch 1, **dadurch gekennzeichnet, dass** der Einsatz (28) mit einer Ölabscheideöffnung (34) versehen ist.

3. Kondensator nach Anspruch 2, **dadurch gekennzeichnet, dass** die Ölabscheideöffnung (34) eine Fläche in der Größenordnung im Bereich von 0,75 bis 9 mm², insbesondere in der Größenordnung im Bereich von 5 bis 7,5 mm² aufweist.

4. Kondensator nach den Ansprüchen 2 und 3 und nach Anspruch 1, **dadurch gekennzeichnet, dass** die Ölabscheideöffnung (34) in einer der Stirnflächen des Einsatzes (28) angeordnet ist.

5. Kondensator nach einem der vorhergehenden Ansprüche, **dadurch gekennzeichnet, dass** die Überlauföffnung (32) eine Fläche in der Größenordnung im Bereich von 50 bis 100 mm², insbesondere in der Größenordnung im Bereich von 75 bis 80 mm² aufweist.

6. Kondensator nach einem der vorhergehenden Ansprüche, **dadurch gekennzeichnet, dass** die Überlauföffnung (32) eine ovale Form aufweist.

7. Kondensator nach einem der Ansprüche 5 und 6 und nach Anspruch 1, **dadurch gekennzeichnet, dass** die Überlauföffnung (32) in einer der Stirnflächen des Einsatzes (28) angeordnet ist.

8. Kondensator nach einem der vorhergehenden Ansprüche, **dadurch gekennzeichnet, dass** der Einsatz (28) eine gebogene Komponente ist, die aus gepunztem Blech hergestellt ist.

9. Kondensator nach einem der vorhergehenden Ansprüche, **dadurch gekennzeichnet, dass** der Einsatz (28) fest mit einer Abdeckung (30) verbunden ist.

10. Kondensator nach Anspruch 9, **dadurch gekennzeichnet, dass** die Abdeckung (30) mit dem Sammelrohr (12, 14) dicht verbunden ist.

## Revendications

1. Condenseur (10) pourvu d'un premier et d'un deuxième tube collecteur (12, 14), d'une pluralité de canaux d'échange de chaleur (16), lesquels s'étendent entre les deux tubes collecteurs, d'une entrée (22) pour un agent de refroidissement sensiblement gazeux, laquelle est ménagée au niveau d'un des deux tubes collecteurs (12, 14), et d'une sortie (24) pour un agent de refroidissement sensiblement liquide, laquelle est ménagée au niveau d'un des deux tubes collecteurs (12, 14), l'un des deux tubes collecteurs (12, 14) étant doté d'un insert (28) qui définit un canal d'écoulement (26) qui est en communication, à une extrémité, avec l'entrée (22) de l'agent de refroidissement et, à l'autre extrémité, au moyen d'une ouverture de trop-plein (32), avec l'intérieur du tube collecteur (12), **caractérisé en ce que** l'insert (28) prend la forme d'une goulotte présentant des faces d'extrémité inclinées.

2. Condenseur selon la revendication 1, **caractérisé en ce que** l'insert (28) est doté d'une ouverture de séparation d'huile (34).

3. Condenseur selon la revendication 2, **caractérisé en ce que** l'ouverture de séparation d'huile (34) possède une aire d'un ordre de grandeur de 0,75 à 9 mm², plus particulièrement d'un ordre de grandeur de 5 à 7,5 mm².

4. Condenseur selon les revendications 2 et 3 et selon la revendication 1, **caractérisé en ce que** l'ouverture de séparation d'huile (34) est ménagée dans l'une des faces d'extrémité de l'insert (28).

5. Condenseur selon l'une des revendications précédentes, **caractérisé en ce que** l'ouverture de trop-plein (32) possède une aire d'un ordre de grandeur de 50 à 100 mm², plus particulièrement d'un ordre de grandeur de 75 à 80 mm².

6. Condenseur selon l'une des revendications précédentes, **caractérisé en ce que** l'ouverture de trop-plein (32) possède une forme ovale.

7. Condenseur selon les revendications 5 et 6 et selon la revendication 1, **caractérisé en ce que** l'ouverture de trop-plein (32) est ménagée dans l'une des faces d'extrémité de l'insert (28).

8. Condenseur selon l'une des revendications précédentes, **caractérisé en ce que** l'insert (28) est une pièce pliée en tôle emboutie.

9. Condenseur selon l'une des revendications précédentes, **caractérisé en ce que** l'insert (28) est fixé à demeure sur un couvercle (30).

10. Condenseur selon la revendication 9, **caractérisé en ce que** le couvercle (30) est fixé par ajustement serré sur le tube collecteur (12, 14).
